# EUROPEAN PATENT SPECIFICATION

(11) **EP 3 555 746 B1**
(45) Date of publication and mention of the grant of the patent: **14.10.2026**
(21) Application number: 17832331.7
(22) Date of filing: 14.12.2017
(51) Int. Cl.: G06F 9/455, H04L 12/46

(54) **A CONFIGURABLE INTERFACE FOR A VIRTUAL FUNCTION IN A COMMUNICATION SYSTEM**
KONFIGURIERBARE SCHNITTSTELLE FÜR EINE VIRTUELLE FUNKTION IN EINEM KOMMUNIKATIONSSYSTEM
A CONFIGURABLE INTERFACE FOR A VIRTUAL FUNCTION IN A COMMUNICATION SYSTEM

(30) Priority: 19.12.2016 US 201615383671
(43) Date of publication of application: 23.10.2019
(73) Proprietor: Alcatel Lucent, 91620 Nozay (FR)
(72) Inventor: KAHN, Colin Leon, Morris Plains, New Jersey 07950 (US)
(74) Representative: Bryers Intellectual Property Ltd
(86) International application number: PCT/IB2017/001657
(87) International publication number: WO 2018/115957

(56) References cited:
- WO-A1-2016/192639
- US-A1- 2015 295 750

## Description

### BACKGROUND

Conventional communication systems include multiple network elements such as entities, nodes, and gateways that implement different sets of functions to support wireless communication. For example, the evolved packet core (EPC) network defined by the Third Generation Partnership Project (3GPP) includes a mobility management entity (MME) to implement functions including authentication and mobility management, a serving gateway (SGW) to implement functions including lawful intercept and providing a mobility anchor for user equipment, a packet data node (PDN) gateway (PGW) to implement functions including charging and policy/rate enforcement, and an authentication, authorization, and accounting (AAA) entity to implement functions including authentication and charging. For another example, a general packet radio service (GPRS) network includes nodes such as a gateway GPRS support node (GGSN) to implement functions including packet routing and forwarding and a serving GPRS support node (SGSN) to implement functions including packet routing, mobility management, authentication, and charging. Interfaces between the functions implemented in the network elements are referred to as reference points, which have defined sets of capabilities and protocols. Each network element supports multiple interfaces to multiple other network elements. For example, an SGW in an EPC network supports an interface to an MME, interfaces to one or more PGWs that are connected to corresponding external networks, and one or more interfaces to base stations or eNodeBs in the communication system. The network element can also support interfaces to an SGSN for 3G interworking and to a PCRF for non-3GPP access policy control.

### BACKGROUND ART

Document D1 (US2015/295750, Blanco et al.) discloses a method and system for managing interconnection of virtual network functions using a connectivity manager. D1 describes virtual network domains containing virtual network infrastructure executing on physical network infrastructure, with virtual network functions connected through links and interfaces for communicating data whilst maintaining isolation from other virtual infrastructures.

Document D2 (WO2016/192639, Huawei Technologies) relates to systems and methods for operating network slices in communication networks such as 5G wireless networks. D2 teaches network slice management including mobile device attach requests, instantiation of network slices, and global connection and mobility management functions operating across multiple network slices.

### BRIEF DESCRIPTION OF THE DRAWINGS

The present disclosure may be better understood, and its numerous features and advantages made apparent to those skilled in the art by referencing, by way of example only, the accompanying drawings. The use of the same reference symbols in different drawings indicates similar or identical items.
FIG. 1 illustrates a communication network that implements network function virtualization (NFV) according to some embodiments.
FIG. 2 is a block diagram of an NFV architecture according to some embodiments.

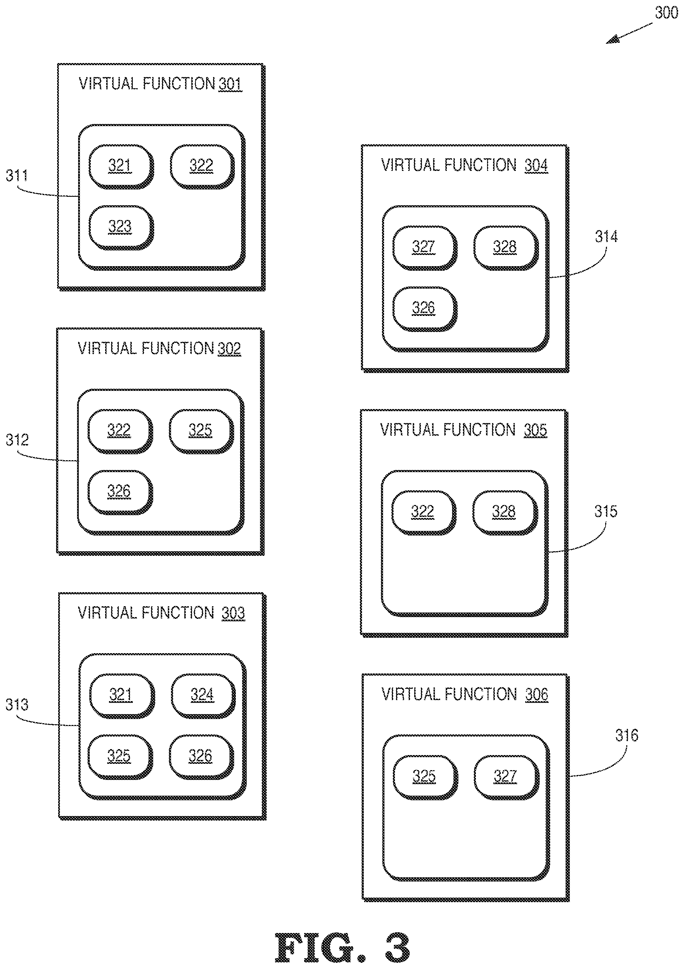

FIG. 3 is a block diagram of a set of virtual functions that each implement a single interface using a configurable number of interface modules according to some embodiments.

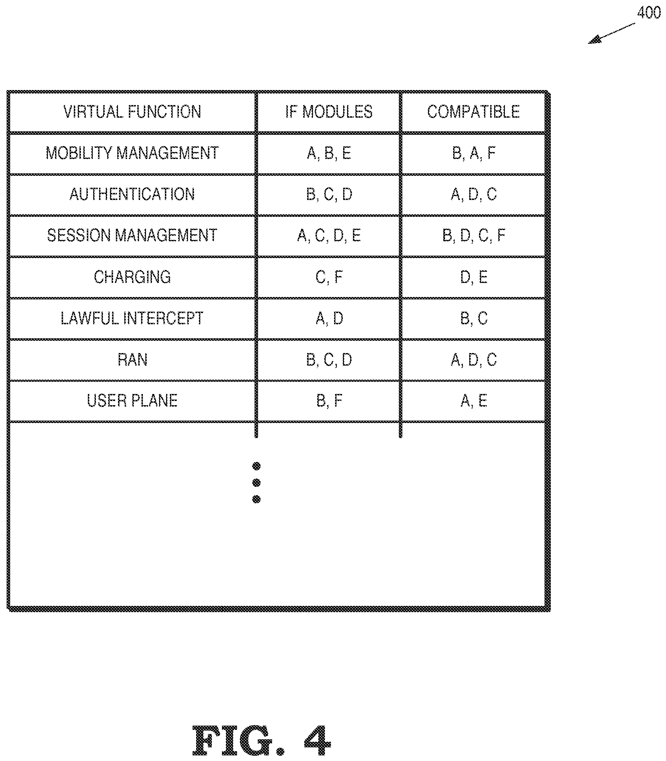

FIG. 4 is a block diagram of a data structure that is used to store identities of virtual functions, supported interface modules, and compatible interface modules according to some embodiments.

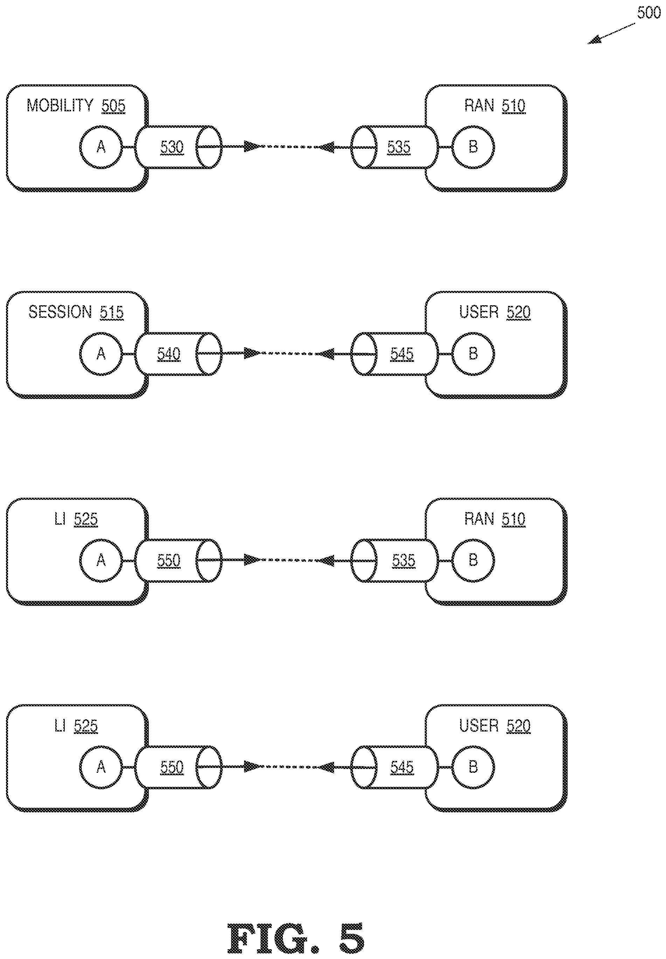

FIG. 5 is a block diagram of a set of communication pathways established between virtual functions using compatible interface modules according to some embodiments.

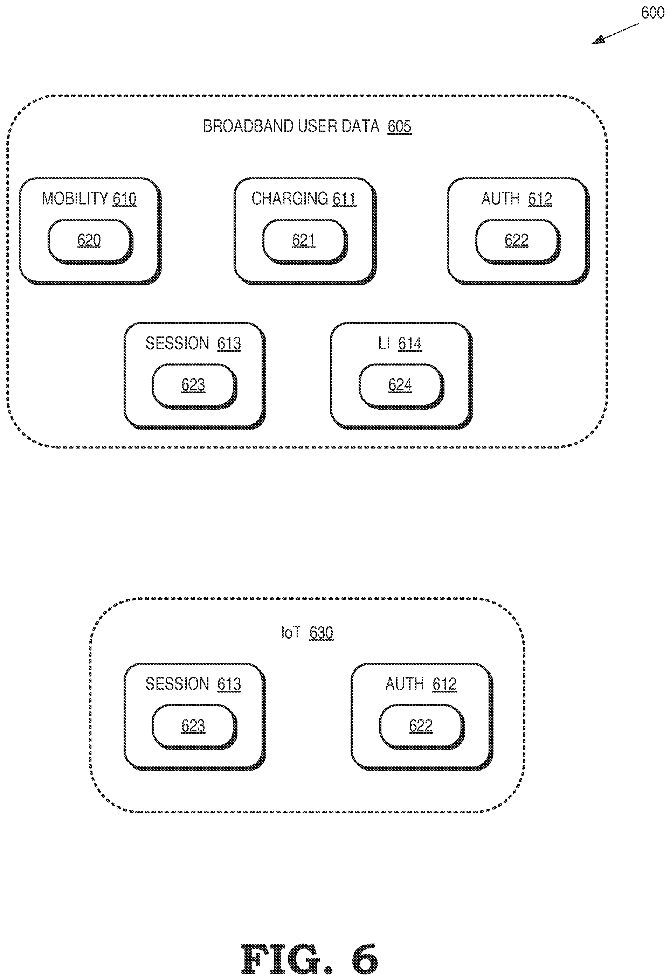

FIG. 6 is a block diagram of a set of network slices that are supported by different combinations of virtual functions according to some embodiments.
FIG. 7 is a flow diagram of a method for instantiating virtual functions that include interfaces configured on the basis of subsets of a set of interface modules according to some embodiments.

### DETAILED DESCRIPTION

Grouping network functions into a constrained number of network elements including an MME, SGW, PGW, AAA, GGSN, and SGSN limits the number of interfaces that are defined (and in some cases standardized) in a communication system. However, the network elements and corresponding interfaces in a conventional wireless communication system are designed for a specific use case: conveying broadband user data for multifunction wireless communication devices such as smart phones, tablets, laptops, and the like. The conventional network architecture is not optimal for other use cases, particularly cases that do not require all of the functions supported by the network elements in the wireless communication system. For example, long battery life and low cost are high priorities for wireless communication devices in the Internet of Things (IoT). Authentication functionality is important for IoT devices, but IoT devices that need not be reached from the network typically do not utilize idle mode mobility functions or active mobility management functions, which unnecessarily consume network resources, reduce battery life, and increase cost. For another example, wireless communication in a "connectionless" mode does not require establishing radio bearers between the user equipment and network elements such a base station or an MME. Functions in these network elements that support bearer management are therefore unnecessary. Hence to support networks that provide only the necessary functions, the granularity of functions needs to be finer than has historically been the case in mobile networks. However, adding functions also means adding additional interfaces that are tailored to support the different usage scenarios, and this leads to a proliferation of standardized interfaces that is not scalable in complex networks.

A flexible and scalable network architecture implements a set of virtual functions that each support a single configurable interface to other virtual functions. A configurable interface is defined for each of the virtual functions using combinations of one or more interface modules that provide access to services of the corresponding virtual function. When a virtual function is defined, the interface modules are chosen from a set of interface modules that are available for use by the virtual functions or new interface modules that can be created. For example, the set of interface modules can include a control plane interface module that supports messages that are transmitted by virtual functions to program routes in a radio access network, and a user plane interface module that supports messages that are received by virtual functions and used to configure the virtual functions to route messages through the radio access network. Virtual functions are not required to support any particular interface module and so the interface for each virtual function can be configured to include the smallest number of interface modules that are necessary to provide the services of the virtual function. The interface modules can be standardized or proprietary.

Different virtual functions are able to communicate with each other if their corresponding interfaces support compatible interface modules. For example, a first virtual function that implements a first interface including the control plane interface module is able to communicate with a second virtual function that implements a second interface including the user plane interface module because the messages transmitted according to the control plane interface module are compatible with the messages received according to the user plane interface module used by the second virtual function. The same applies between a first virtual function that implements a first interface including the control plane interface module that can communicate with a second virtual function that implements a second interface including a second control plane module because the messages transmitted according to the first control plane interface module are compatible with the messages received according to the second control plane interface module used by the second virtual function. The same interface modules can be used by different virtual functions. For example, the interfaces for mobility management functions, session management functions, and lawful intercept functions can be configured to include control plane interface modules or user plane interface modules for programming routes. The virtual functions advertise the interface modules supported by their interfaces, e.g., using a broadcast mechanism, a query/response mechanism with other virtual functions, or by providing information to a registry that stores information defining the interfaces for a set of virtual functions. Virtual functions are therefore able to determine the identities of other virtual functions that support compatible interface modules so that the virtual functions can communicate to exchange services.

Network function virtualization (NFV) implements virtual functions on top of a virtual infrastructure that is deployed over general-purpose servers. For example, an NFV architecture typically includes computing hardware such as processors or servers, storage hardware such as memory devices, and network hardware to interconnect the computing and storage hardware. The computing, storage, and network hardware is virtualized to provide virtual computing, storage, and networking resources such as virtual machines that can run applications using instances of an operating system executing on the virtual machine. Virtual networks may also be created using virtual routers implemented with the virtual computing and network resources. The virtual resources may be used to implement virtual network functions such as routing, load-balancing, firewalls, and the like. Virtual resources can use any combination of hardware and the hardware used to implement the virtual resources can change dynamically.

Virtual functions are implemented using dynamically variable combinations of virtual resources and hardware. Some embodiments of virtual functions implement micro-functions such as mobility management, authentication, session management, charging, lawful intercept, radio access network functionality, user plane functionality, and the like. The virtual resources (as well as the corresponding hardware) used to implement the virtual functions can change depending on network conditions such as the volume of traffic served by the virtual network. Virtual functions are also able to migrate among the available virtual resources or hardware. Since hardware and virtual resources are dynamically allocated, the NFV architecture allows for operational efficiencies such as dynamic creation of applications, service chaining, scaling, and healing.

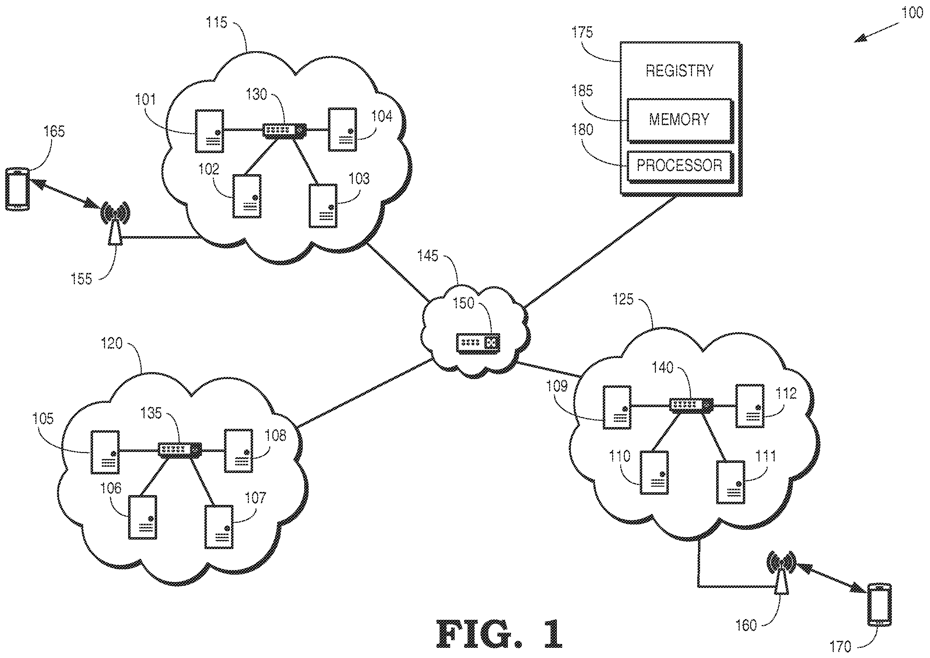

FIG. 1 illustrates a communication network 100 that implements network function virtualization (NFV) according to some embodiments. The communication network 100 includes hardware computing resources such as servers 101, 102, 103, 104, 105, 106, 107, 108, 109, 110, 111, 112 (collectively referred to herein as "the servers 101-112"). Some embodiments of the servers 101-112 are implemented using processing units such as central processing units (CPUs), graphics processing units (GPUs), accelerated processing units (APUs), processor cores, compute units, application-specific integrated circuits (ASICs), field programmable gate arrays (FPGAs), and the like. Some embodiments of the servers 101-112 also include hardware storage resources such as memories (not shown in FIG. 1) for storing data or instructions that may be used by the servers 101-112, the results of operations performed by the servers 101-112, and the like.

The servers 101-112 are partitioned into interconnected groups. For example, the servers 101-104 can be interconnected as part of an intranet 115, the servers 105-108 can be interconnected as part of an intranet 120, and the servers 109-112 can be interconnected as part of an intranet 125. The intranets 115, 120, 125 are formed using hardware network resources 130, 135, 140 such as switches, routers, cables, optical fiber, and the like. The servers 101-112 in the intranets 115, 120, 125 can also be interconnected as part of a network 145 that may be formed using additional hardware network resources 150 such as switches, routers, cables, optical fiber, and the like.

The communication network 100 also includes radio access networks 155, 160 for providing wireless connectivity. The radio access networks 155, 160 can also be referred to as (or include) base stations, access points, base station routers, macro cells, microcells, femtocells, and the like. The radio access networks 155, 160 communicate with one or more user equipment 165, 170 over corresponding air interfaces. As used herein, the term "user equipment" refers to a device that is able to establish a wireless connection with the communication network 100 and transmit or receive information over an air interface. The user equipment 165, 170 can therefore include smart phones, tablet computers, wireless-enabled wristwatches, wireless-enabled laptop computers, as well as other wireless-enabled devices such as home appliances, power meters, water meters, vehicles, and the like. Thus, user equipment are not required to be owned by, operated by, or otherwise associated with a "user" such as a person.

The hardware computing, storage, and network resources in the communication network 100 are used to implement an NFV architecture. For example, the hardware computing, storage, and network resources can be used to implement corresponding virtual computing, storage, and network resources, which are used to implement virtual network functions. Resources of one or more of the servers 101-112 are used to instantiate virtual functions using the virtual infrastructure of the NFV architecture. As used herein, the term "instantiate" refers to initiating, configuring, and organizing portions of the hardware computing, storage, and network resources to perform the operations required by the virtual functions. Examples of virtual functions that can be implemented in the virtual infrastructure include mobility management, authentication, session management, charging, lawful intercept, radio access network functionality, user plane functionality, and the like. Some embodiments of the servers 101-112 are also able to instantiate virtual functions at other, finer levels of granularity. Each virtual function communicates with other virtual functions in the wireless communication system 100 using a single interface that is configured using a subset of interface modules that is selected from a set of interface modules.

The virtual functions advertise their supported interface modules so that other virtual functions can identify compatible interface modules used to configure the interface. In the illustrated embodiment, the virtual functions publish information identifying the virtual function and the subset of interface modules supported by its interface to a registry 175 that is implemented using a processor 180 and a memory 185. Some embodiments of the registry 175 also contain additional information about the virtual functions such as their capabilities, capacities, current loading, and the like. The registry 175 stores the published information for the virtual functions, receives requests for information identifying the virtual functions or the interface modules supported by the virtual functions, and provides the requested information to the requesting virtual function. Some embodiments of the communication network 100 support other techniques for advertising the virtual functions and interface modules such as broadcasting the information throughout the communication network 100 or establishing query-response relationships between the virtual functions that enable the virtual functions to discover and query each other to determine the supported interface modules, and the like. Communication can then be established between the virtual functions using the compatible interface modules.

Some embodiments of the communication network 100 support multiple services that are directed to different use cases. The services can be referred to as "network slices." For example, the communication network 100 can instantiate a network slice to support broadband user data services such as music, film, or multimedia streaming. For another example, the communication network 100 can instantiate a network slice to support Internet-of-Things (IoT) services such as interconnecting wireless-enabled appliances, power or water meters, and the like. Numerous concurrent network slices can be supported by the communication network 100. Each network slice can be implemented using different numbers or combinations of virtual functions that are selected to support the service requirements of the network slice. Each network slice can be implemented using different numbers or combinations of virtual functions that are selected to support the service requirements of the network slice.

In some embodiments, certain aspects of the techniques described above may be implemented by one or more processors of a processing system executing software. The software comprises one or more sets of executable instructions stored or otherwise tangibly embodied on a non-transitory computer readable storage medium. The software can include the instructions and certain data that, when executed by the one or more processors, manipulate the one or more processors to perform one or more aspects of the techniques described above. The non-transitory computer readable storage medium can include, for example, a magnetic or optical disk storage device, solid state storage devices such as Flash memory, a cache, random access memory (RAM) or other non-volatile memory device or devices, and the like. The executable instructions stored on the non-transitory computer readable storage medium may be in source code, assembly language code, object code, or other instruction format that is interpreted or otherwise executable by one or more processors.

A computer readable storage medium may include any storage medium, or combination of storage media, accessible by a computer system during use to provide instructions and/or data to the computer system. Such storage media can include, but is not limited to, optical media (e.g., compact disc (CD), digital versatile disc (DVD), Blu-Ray disc), magnetic media (e.g., floppy disc, magnetic tape, or magnetic hard drive), volatile memory (e.g., random access memory (RAM) or cache), non-volatile memory (e.g., read-only memory (ROM) or Flash memory), or microelectromechanical systems (MEMS)-based storage media. The computer readable storage medium may be embedded in the computing system (e.g., system RAM or ROM), fixedly attached to the computing system (e.g., a magnetic hard drive), removably attached to the computing system (e.g., an optical disc or Universal Serial Bus (USB)-based Flash memory), or coupled to the computer system via a wired or wireless network (e.g., network accessible storage (NAS)).
charging virtual function 611. People do not communicate using services provided to the loT devices by the second network slice 630 and so there is no need for lawful intercept. The second network slice 630 therefore does not implement the lawful intercept virtual function 614.

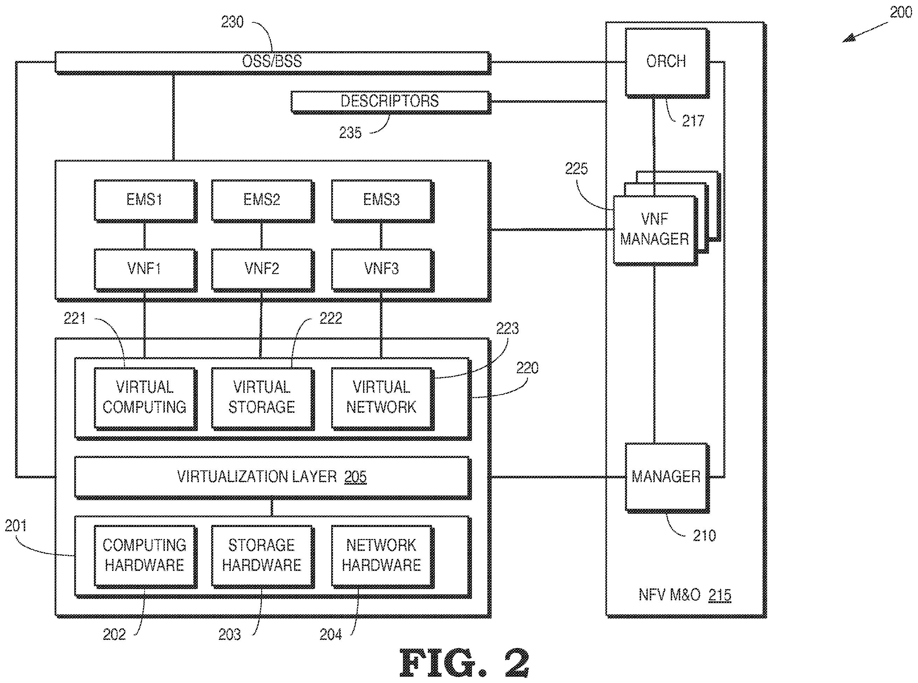

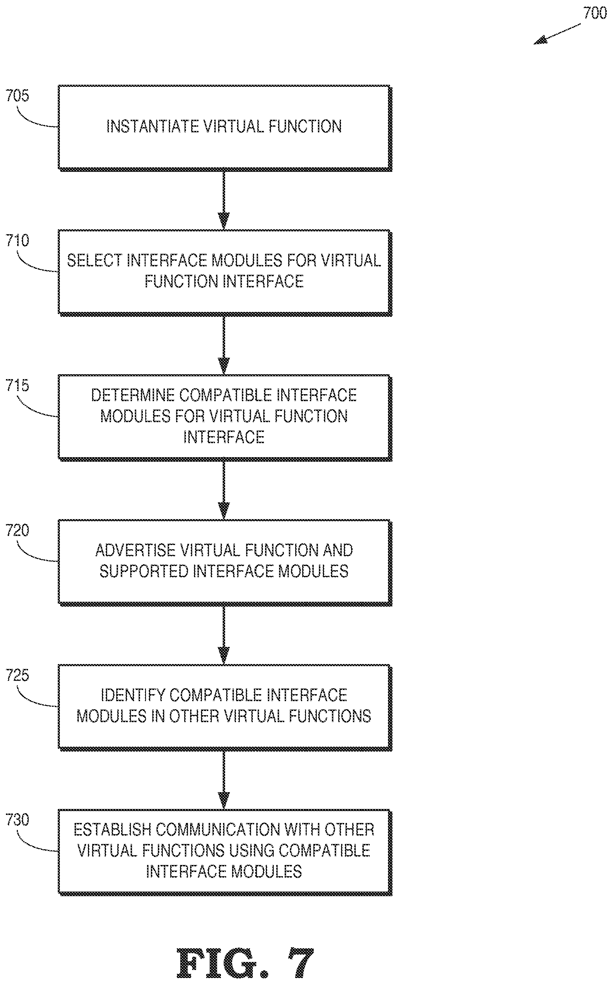

FIG. 7 is a flow diagram of a method 700 for instantiating virtual functions that include interfaces configured on the basis of subsets of a set of interface modules according to some embodiments. The method 700 is implemented in some embodiments of the communication network 100 shown in FIG. 1 or the NFV architecture 200 shown in FIG. 2.

At block 705, a virtual function is instantiated using resources of a virtual architecture such as the communication network 100 shown in FIG. 1 or the NFV architecture 200 shown in FIG. 2. The virtual function is configured to provide one or more services to user equipment.

At block 710, a subset of interface modules is selected from a set of available interface modules. The subset of interface modules is selected based upon the services that are supported by the virtual function and are used to configure an interface to the virtual function.

At block 715, the system determines the interface modules that are compatible with the interface modules used to configure the interface. The compatible interface modules can be identified using a mapping between compatible interface modules.

At block 720, the identity of the virtual function and its supported interface modules are advertised. As discussed herein, the information can be advertised by broadcasting the information to the wireless communication system, establishing a query/response relationship between the virtual function and the other virtual functions, publishing the information in a registry that is accessible to other virtual functions, or other advertising technique. Some embodiments of the virtual function also advertise interface modules that are compatible with its supported interface modules.

At block 725, the virtual function identifies compatible interface modules that are used to configure interfaces to other virtual functions. The compatible interface modules (or the corresponding virtual functions) can be identified based on information advertised by the other virtual functions. For example, the virtual function can query a registry that stores information identifying the other virtual functions and the compatible interface modules.

At block 730, the virtual function establishes communication with one or more other virtual functions via their interfaces according to the protocols determined by the compatible interface modules.

In some embodiments, certain aspects of the techniques described above may implemented by one or more processors of a processing system executing software. The software comprises one or more sets of executable instructions stored or otherwise tangibly embodied on a non-transitory computer readable storage medium. The software can include the instructions and certain data that, when executed by the one or more processors, manipulate the one or more processors to perform one or more aspects of the techniques described above. The non-transitory computer readable storage medium can include, for example, a magnetic or optical disk storage device, solid state storage devices such as Flash memory, a cache, random access memory (RAM) or other non-volatile memory device or devices, and the like. The executable instructions stored on the non-transitory computer readable storage medium may be in source code, assembly language code, object code, or other instruction format that is interpreted or otherwise executable by one or more processors.

A computer readable storage medium may include any storage medium, or combination of storage media, accessible by a computer system during use to provide instructions and/or data to the computer system. Such storage media can include, but is not limited to, optical media (e.g., compact disc (CD), digital versatile disc (DVD), Blu-Ray disc), magnetic media (e.g., or magnetic hard drive), volatile memory (e.g., random access memory (RAM) or cache), non-volatile memory (e.g., read-only memory (ROM) or Flash memory), or microelectromechanical systems (MEMS)-based storage media. The computer readable storage medium may be embedded in the computing system (e.g., system RAM or ROM), fixedly attached to the computing system (e.g., a magnetic hard drive), removably attached to the computing system (e.g., an optical disc or Universal Serial Bus (USB)-based Flash memory), or coupled to the computer system via a wired or wireless network (e.g., network accessible storage (NAS)).

Note that not all of the activities or elements described above in the general description are required, that a portion of a specific activity or device may not be required, and that one or more further activities may be performed, or elements included, in addition to those described. Still further, the order in which activities are listed are not necessarily the order in which they are performed. Also, the concepts have been described with reference to specific embodiments. However, one of ordinary skill in the art appreciates that various modifications and changes can be made without departing from the scope of the present disclosure as set forth in the claims below. Accordingly, the specification and figures are to be regarded in an illustrative rather than a restrictive sense, and all such modifications are intended to be included within the scope of the present disclosure.

Benefits, other advantages, and solutions to problems have been described above with regard to specific embodiments. However, the benefits, advantages, solutions to problems, and any feature(s) that may cause any benefit, advantage, or solution to occur or become more pronounced are not to be construed as a critical, required, or essential feature of any or all the claims. No limitations are intended to the details of construction or design herein shown, other than as described in the claims below. It is therefore evident that the particular embodiments disclosed above may be altered or modified and all such variations are considered within the scope of the disclosed subject matter. Accordingly, the protection sought herein is as set forth in the claims below.

## Claims

1. A method comprising:
instantiating a first virtual network function using a virtual infrastructure that is deployed over at least one server in a communication system (705);
selecting a first subset of interface modules from a set of interface modules based upon services that are supported by the first virtual function (710);
configuring a first interface to the first virtual network function using the first subset of interface modules;
determining interface modules of the set of interface modules that are compatible with the first subset of interface modules (715);
advertising information identifying the first virtual network function and the first subset of interface modules used to configure the first interface to the first virtual network function (720);
identifying by the first virtual network function compatible interface modules that are used to configure interfaces for a second virtual network function (725);
establishing communication between the first virtual network function and the second virtual network function over the first interface based on a first interface module in the first subset and a second interface module.

2. The method of claim 1, wherein selecting the first subset comprises:
defining a new interface module;
identifying at least one other interface module that is compatible with the new interface module;
adding the new interface module to the set of interface modules; and
selecting the new interface module.

3. The method of claim 1, further comprising:
establishing communication between the first virtual network function and a fourth virtual network function over the first interface via a fourth interface to the fourth virtual network function, wherein the fourth interface is configured with a fourth subset of the set of interface modules that includes the second interface module, and wherein communication between the first virtual network function and the fourth virtual network function is established concurrently with communication between the first virtual network function and the second virtual network function.

4. An apparatus, comprising:
memory hardware (204) to store data and instructions;
computing hardware (202) to implement a virtual infrastructure using data and instructions stored in the memory hardware (204), wherein the computing hardware (202) is configured to:
instantiate a first virtual network function (301), select a first subset of interface modules from a set of interface modules based upon services that are supported by the first virtual function (301),
configure a first interface (305) to the first virtual network function (301) using the first subset of interface modules;
determine interface modules of the set of interface modules that are compatible with the first subset of interface modules;
advertise information identifying the first virtual network function (301) and the first subset of interface modules used to configure the first interface (305) to the first virtual network function (301);
identify by the first virtual network function (301) compatible interface modules that are used to configure interfaces for a second virtual network function (302); and
network hardware (206) to interconnect the memory hardware (204) and the computing hardware (202), wherein the networking hardware (206) is configured to establish communication between the first virtual network function (301) and the second virtual network function (302) over the first interface (305) based on a first interface module in the first subset and the second interface module.

5. The apparatus of claim 4, wherein the computing hardware (202) is further configured to:
define a new interface module;
identify at least one other interface module that is compatible with the new interface module;
add the new interface module to the set of interface modules; and
select the new interface module for configuring the first interface (305).

6. The apparatus of claim 4, wherein the network hardware (206) is further configured to: establish communication between the first virtual network function (301) and a fourth virtual network function over the first interface (305) via a fourth interface to the fourth virtual network function, wherein the fourth interface is configured with a fourth subset of the set of interface modules that includes the second interface module, and wherein communication between the first virtual network function (301) and the fourth virtual network function is established concurrently with communication between the first virtual network function (301) and the second virtual network function (302).

## Patentansprüche

1. Verfahren, umfassend:
Instanziieren einer ersten virtuellen Netzwerkfunktion unter Verwendung einer virtuellen Infrastruktur, die über mindestens einen Server in einem Kommunikationssystem eingesetzt wird (705);
Auswählen eines ersten Teilsatzes von Schnittstellenmodulen aus einem Satz von Schnittstellenmodulen auf der Grundlage von Diensten, die von der ersten virtuellen Funktion unterstützt werden (710);
Konfigurieren einer ersten Schnittstelle zu der ersten virtuellen Netzwerkfunktion unter Verwendung des ersten Teilsatzes von Schnittstellenmodulen;
Bestimmen von Schnittstellenmodulen des Satzes von Schnittstellenmodulen, die mit dem ersten Teilsatz von Schnittstellenmodulen kompatibel sind (715);
Ankündigen von Informationen, die die erste virtuelle Netzwerkfunktion und den ersten Teilsatz von Schnittstellenmodulen identifizieren, die zum Konfigurieren der ersten Schnittstelle zu der ersten virtuellen Netzwerkfunktion verwendet werden (720);
Identifizieren, durch die erste virtuelle Netzwerkfunktion, von kompatiblen Schnittstellenmodulen, die zum Konfigurieren von Schnittstellen für eine zweite virtuelle Netzwerkfunktion verwendet werden (725);
Herstellen einer Kommunikation zwischen der ersten virtuellen Netzwerkfunktion und der zweiten virtuellen Netzwerkfunktion über die erste Schnittstelle auf der Grundlage eines ersten Schnittstellenmoduls in dem ersten Teilsatz und eines zweiten Schnittstellenmoduls.

2. Verfahren nach Anspruch 1, wobei das Auswählen des ersten Teilsatzes umfasst:
Definieren eines neuen Schnittstellenmoduls;
Identifizieren mindestens eines anderen Schnittstellenmoduls, das mit dem neuen Schnittstellenmodul kompatibel ist;
Hinzufügen des neuen Schnittstellenmoduls zu dem Satz von Schnittstellenmodulen; und
Auswählen des neuen Schnittstellenmoduls.

3. Verfahren nach Anspruch 1, ferner umfassend:
Herstellen einer Kommunikation zwischen der ersten virtuellen Netzwerkfunktion und einer vierten virtuellen Netzwerkfunktion über die erste Schnittstelle via eine vierte Schnittstelle zu der vierten virtuellen Netzwerkfunktion, wobei die vierte Schnittstelle mit einem vierten Teilsatz des Satzes von Schnittstellenmodulen konfiguriert ist, der das zweite Schnittstellenmodul umfasst, und wobei die Kommunikation zwischen der ersten virtuellen Netzwerkfunktion und der vierten virtuellen Netzwerkfunktion gleichzeitig mit der Kommunikation zwischen der ersten virtuellen Netzwerkfunktion und der zweiten virtuellen Netzwerkfunktion hergestellt wird.

4. Vorrichtung, umfassend:
eine Speicherhardware (204) zum Speichern von Daten und Anweisungen;
eine Rechenhardware (202) zum Implementieren einer virtuellen Infrastruktur unter Verwendung von Daten und Anweisungen, die in der Speicherhardware (204) gespeichert sind, wobei die Rechenhardware (202) dazu konfiguriert ist:
eine erste virtuelle Netzwerkfunktion (301) zu instanziieren, einen ersten Teilsatz von Schnittstellenmodulen aus einem Satz von Schnittstellenmodulen auf der Grundlage von Diensten auszuwählen, die von der ersten virtuellen Funktion (301) unterstützt werden,
eine erste Schnittstelle (305) zu der ersten virtuellen Netzwerkfunktion (301) unter Verwendung des ersten Teilsatzes von Schnittstellenmodulen zu konfigurieren;
Schnittstellenmodule des Satzes von Schnittstellenmodulen zu bestimmen, die mit dem ersten Teilsatz von Schnittstellenmodulen kompatibel sind;
Informationen anzukündigen, die die erste virtuelle Netzwerkfunktion (301) und den ersten Teilsatz von Schnittstellenmodulen identifizieren, die zum Konfigurieren der ersten Schnittstelle (305) zu der ersten virtuellen Netzwerkfunktion (301) verwendet werden;
durch die erste virtuelle Netzwerkfunktion (301) kompatible Schnittstellenmodule zu identifizieren, die zum Konfigurieren von Schnittstellen für eine zweite virtuelle Netzwerkfunktion (302) verwendet werden; und
eine Netzwerkhardware (206) zum Verbinden der Speicherhardware (204) und der Rechenhardware (202), wobei die Vernetzungshardware (206) dazu konfiguriert ist, eine Kommunikation zwischen der ersten virtuellen Netzwerkfunktion (301) und der zweiten virtuellen Netzwerkfunktion (302) über die erste Schnittstelle (305) auf der Grundlage eines ersten Schnittstellenmoduls in dem ersten Teilsatz und des zweiten Schnittstellenmoduls herzustellen.

5. Vorrichtung nach Anspruch 4, wobei die Rechenhardware (202) ferner dazu konfiguriert ist:
ein neues Schnittstellenmodul zu definieren;
mindestens ein anderes Schnittstellenmodul zu identifizieren, das mit dem neuen Schnittstellenmodul kompatibel ist;
das neue Schnittstellenmodul zu dem Satz von Schnittstellenmodulen hinzuzufügen; und
das neue Schnittstellenmodul zum Konfigurieren der ersten Schnittstelle (305) auszuwählen.

6. Vorrichtung nach Anspruch 4, wobei die Netzwerkhardware (206) ferner dazu konfiguriert ist:
eine Kommunikation zwischen der ersten virtuellen Netzwerkfunktion (301) und einer vierten virtuellen Netzwerkfunktion über die erste Schnittstelle (305) via eine vierte Schnittstelle zu der vierten virtuellen Netzwerkfunktion herzustellen, wobei die vierte Schnittstelle mit einem vierten Teilsatz des Satzes von Schnittstellenmodulen konfiguriert ist, der das zweite Schnittstellenmodul umfasst, und wobei die Kommunikation zwischen der ersten virtuellen Netzwerkfunktion (301) und der vierten virtuellen Netzwerkfunktion gleichzeitig mit der Kommunikation zwischen der ersten virtuellen Netzwerkfunktion (301) und der zweiten virtuellen Netzwerkfunktion (302) hergestellt wird.

## Revendications

1. Procédé comprenant :
l'instanciation d'une première fonction de réseau virtuelle à l'aide d'une infrastructure virtuelle qui est déployée sur au moins un serveur dans un système de communication (705) ; la sélection d'un premier sous-ensemble de modules d'interface parmi un ensemble de modules d'interface sur la base de services qui sont pris en charge par la première fonction virtuelle (710) ;
la configuration d'une première interface vers la première fonction de réseau virtuelle à l'aide du premier sous-ensemble de modules d'interface ;
la détermination de modules d'interface de l'ensemble de modules d'interface qui sont compatibles avec le premier sous-ensemble de modules d'interface (715) ;
l'annonce d'informations identifiant la première fonction de réseau virtuelle et le premier sous-ensemble de modules d'interface utilisés pour configurer la première interface vers la première fonction de réseau virtuelle (720) ;
l'identification, par la première fonction de réseau virtuelle, de modules d'interface compatibles qui sont utilisés pour configurer des interfaces pour une deuxième fonction de réseau virtuelle (725) ;
l'établissement d'une communication entre la première fonction de réseau virtuelle et la deuxième fonction de réseau virtuelle sur la première interface sur la base d'un premier module d'interface dans le premier sous-ensemble et d'un deuxième module d'interface.

2. Procédé selon la revendication 1, dans lequel la sélection du premier sous-ensemble comprend :
la définition d'un nouveau module d'interface ;
l'identification d'au moins un autre module d'interface qui est compatible avec le nouveau module d'interface ;
l'ajout du nouveau module d'interface à l'ensemble de modules d'interface ; et
la sélection du nouveau module d'interface.

3. Procédé selon la revendication 1, comprenant en outre :
l'établissement d'une communication entre la première fonction de réseau virtuelle et une quatrième fonction de réseau virtuelle sur la première interface via une quatrième interface vers la quatrième fonction de réseau virtuelle, dans lequel la quatrième interface est configurée avec un quatrième sous-ensemble de l'ensemble de modules d'interface qui inclut le deuxième module d'interface, et dans lequel la communication entre la première fonction de réseau virtuelle et la quatrième fonction de réseau virtuelle est établie simultanément avec la communication entre la première fonction de réseau virtuelle et la deuxième fonction de réseau virtuelle.

4. Appareil, comprenant :
un matériel de mémoire (204) pour stocker des données et des instructions ;
un matériel de calcul (202) pour mettre en œuvre une infrastructure virtuelle à l'aide de données et d'instructions stockées dans le matériel de mémoire (204), dans lequel le matériel de calcul (202) est configuré pour :
instancier une première fonction de réseau virtuelle (301), sélectionner un premier sous-ensemble de modules d'interface parmi un ensemble de modules d'interface sur la base de services qui sont pris en charge par la première fonction virtuelle (301),
configurer une première interface (305) vers la première fonction de réseau virtuelle (301) à l'aide du premier sous-ensemble de modules d'interface ;
déterminer des modules d'interface de l'ensemble de modules d'interface qui sont compatibles avec le premier sous-ensemble de modules d'interface ;
annoncer des informations identifiant la première fonction de réseau virtuelle (301) et le premier sous-ensemble de modules d'interface utilisés pour configurer la première interface (305) vers la première fonction de réseau virtuelle (301) ;
identifier, par la première fonction de réseau virtuelle (301), des modules d'interface compatibles qui sont utilisés pour configurer des interfaces pour une deuxième fonction de réseau virtuelle (302) ; et
un matériel de réseau (206) pour interconnecter le matériel de mémoire (204) et le matériel de calcul (202), dans lequel le matériel de mise en réseau (206) est configuré pour établir une communication entre la première fonction de réseau virtuelle (301) et la deuxième fonction de réseau virtuelle (302) sur la première interface (305) sur la base d'un premier module d'interface dans le premier sous-ensemble et du deuxième module d'interface.

5. Appareil selon la revendication 4, dans lequel le matériel de calcul (202) est en outre configuré pour :
définir un nouveau module d'interface ;
identifier au moins un autre module d'interface qui est compatible avec le nouveau module d'interface ;
ajouter le nouveau module d'interface à l'ensemble de modules d'interface ; et
sélectionner le nouveau module d'interface pour configurer la première interface (305).

6. Appareil selon la revendication 4, dans lequel le matériel de réseau (206) est en outre configuré pour :
établir une communication entre la première fonction de réseau virtuelle (301) et une quatrième fonction de réseau virtuelle sur la première interface (305) via une quatrième interface vers la quatrième fonction de réseau virtuelle, dans lequel la quatrième interface est configurée avec un quatrième sous-ensemble de l'ensemble de modules d'interface qui inclut le deuxième module d'interface, et dans lequel la communication entre la première fonction de réseau virtuelle (301) et la quatrième fonction de réseau virtuelle est établie simultanément avec la communication entre la première fonction de réseau virtuelle (301) et la deuxième fonction de réseau virtuelle (302).
